# EUROPÄISCHE PATENTANMELDUNG

(11) **EP 2 808 620 A2**
(43) Veröffentlichungstag der Anmeldung: **03.12.2014**
(21) Anmeldenummer: 14164832.9
(22) Anmeldetag: 16.04.2014
(51) Int. Cl.: F24J 2/52

(54) **Trägervorrichtung für Photovoltaik- oder Solarkollektormodul**

(30) Priorität: 27.05.2013 CH 10132013
(71) Anmelder: Schürch-Egli AG, 6204 Sempach (CH)
(72) Erfinder: Egli, Stefan, 6232 Geuensee (CH)
(74) Vertreter: Werner, André

(57) **Zusammenfassung**

Die vorliegende Erfindung schlägt eine Trägervorrichtung (1) für mindestens ein Photovoltaik- oder Solarkollektor-Modul (2), insbesondere zur Anordnung auf einem Flachdach vor. Die Trägervorrichtung (1) umfasst einen Boden (3) und zwei einander gegenüberliegend angeordnete Wände (41, 42), wobei beide Wände (41, 42) an ihrer Oberkante je ein abgewinkeltes Profil (51, 52) aufweisen, derart dass die beiden abgewinkelten Profile (51, 52) zusammen eine ebene, zum Boden hin geneigte Auflage- bzw. Montagegelegenheit für das mindestens eine Photovoltaik- oder Solarkollektor-Modul (2) bilden, und wobei die Trägervorrichtung (1) einteilig ausgeführt ist. Die Trägervorrichtung (1) ist vorzugsweise aus einem rechteckigen Aluminiumblech durch Biegeformung herstellbar, insbesondere durch Ausführen von vier Biegekanten (61, 62, 63, 64).

## Beschreibung

### TECHNISCHES GEBIET DER ERFINDUNG

Die vorliegende Erfindung betrifft eine Trägervorrichtung bzw. eine Befestigungsstruktur für mindestens ein Photovoltaik- oder Solarkollektor-Modul, insbesondere geeignet zur Anordnung auf einem Flachdach.

### HINTERGRUND DER ERFINDUNG

Im Rahmen des wachsenden Trends hin zur Verwendung erneuerbarer Energiequellen gewinnen Photovoltaikanlagen zur Produktion von Elektrizität und Solarkollektoranlagen zur Erzeugung von Warmwasser, welche an bestehende Wohn-und Industriebauten nachgerüstet oder an entsprechenden neuen Gebäuden installiert werden können, zunehmend an Bedeutung. So besteht insbesondere der Wunsch vieler privater Hausbesitzer und Firmen eigene Photovoltaik-und/oder Solarkollektorinstallationen auf ihren Gebäudedächern zu montieren. Dabei stehen vor allem kostengünstige und einfach zu montierende Lösungen im Vordergrund. Je nach Art des Gebäudedaches stehen verschiedene Lösungen zur Verfügung.

Für Flachdächer oder für das Aufstellen auf einer ebenen Fläche sind aus dem Stand der Technik unterschiedliche Trägervorrichtungen und Montagesysteme für Solarmodule (d.h. Photovoltaik- oder Solarkollektormodule) bekannt.

So wird in der DE 10 2009 056 318 A1 ein gestellartiger Träger für wenigstens ein Solarpaneel, welcher insbesondere zur Befestigung auf einem Flachdach geeignet ist, beschreiben. Diese bekannte Trägervorrichtung umfasst eine Wanne, insbesondere zur Aufnahme von Schüttgut, und mit der Wanne verbundene Befestigungsmittel, die das wenigstens eine Solarpaneel im montierten Zustand über der Fläche der Wanne halten. An der Wanne sind Verbindungsmittel angeordnet, wobei die Verbindungsmittel und/oder die Befestigungsmittel Schiebeaufnahmen aufweisen, mittels derer die Befestigungsmittel mit der Wanne lösbar verbindbar sind.

In der DE 10 2011 054 554 A1 wird ferner eine kastenartige Trägervorrichtung zum Aufnehmen und Tragen von einem oder mehreren Photovoltaik- oder Solarkollektor-Modulen für ein Flachdach beschrieben. Diese bekannte Trägervorrichtung hat mindestens zwei Wände, insbesondere als Seitenwände mit einer, vorzugsweise rechtwinklig, abgewinkelten Fläche zur Auflage des Moduls, wobei die abgewinkelten Flächen der Wände jeweils bezüglich einer Bodenkante der Seitenwände gerade ausgebildet sind, an einer Vorderwand eine Haltefläche, insbesondere mit einer Umgreiffläche, ausgebildet ist, um das Modul in einer zum Boden geneigten, und insbesondere vertikalen, Richtung zu sichern, und insbesondere sind die Wände zu einem Kasten zusammenbaubar ausgebildet. Die gerahmten Module sind somit leicht in einen kompakten Kasten ein- und aufsetzbar, der selbsttragend ist. Weiter umfasst diese Trägervorrichtung eine Fassung und eine Befestigungsvorrichtung zur Aufnahme und Sicherung von mindestens einem Photovoltaik- oder Solar-Modul. Die Fassung ist durch mindestens drei Fassungsseiten ausbildbar, wobei die Vorderwand mit der Halteeinrichtung eine mittlere, vollständige oder teilweise ausgebildete Fassungsseite und die Seitenwände oder Seitenflächen benachbarter Module beidseitig zur mittleren Fassungsseite, erste und dritte Fassungsseiten vollständig oder teilweise bilden.

Der Aufbau der beiden beschriebenen bekannten Trägervorrichtungen für Solarmodule ist relativ komplex, und folglich ist deren Herstellung entsprechend aufwändig und kostspielig.

### ZUSAMMENFASSUNG DER ERFINDUNG

Es ist eine Aufgabe der vorliegenden Erfindung eine kostengünstige Trägervorrichtung bereitzustellen, welche einfach aufgebaut ist und schnell sowie ohne grossen Aufwand auf Flachdächern oder anderen ebenen Flächen montiert werden kann.

Erfindungsgemäss wird diese Aufgabe durch den Gegenstand von Anspruch 1 gelöst. Eine Photovoltaik- oder Solarkollektor-Installation mit einer erfindungsgemässen Trägervorrichtung ist Gegenstand von Anspruch 10. Spezifische Ausführungsvarianten sind in den abhängigen Ansprüchen definiert.

Eine erfindungsgemässe Trägervorrichtung für mindestens ein Photovoltaik- oder Solarkollektor-Modul, insbesondere zur Anordnung auf einem Flachdach, umfasst einen Boden und zwei einander gegenüberliegend angeordnete Wände, wobei die Seitenwände an ihrer Oberkante je ein abgewinkeltes Profil aufweisen, derart dass die beiden abgewinkelten Profile zusammen eine ebene, zum Boden hin geneigte Auflage- bzw. Montagegelegenheit für das mindestens eine Photovoltaik-oder Solarkollektor-Modul bilden, und wobei die Trägervorrichtung einteilig ausgeführt ist.

In einer Ausführungsvariante der Trägervorrichtung bilden die Wände Seitenwände und verlaufen in Längsrichtung von einer Vorderkante zu einer Rückkante der Wände hin ansteigend.

In einer alternativen Ausführungsvariante der Trägervorrichtung bilden die Wände eine Vorderwand und eine Rückwand, wobei die Rückwand höher ist als die Vorderwand.

In einer weiteren Ausführungsvariante ist die Trägervorrichtung aus einem plattenförmigen Material, vorzugsweise aus einem Aluminiumblech, geformt.

In einer weiteren Ausführungsvariante ist die Trägervorrichtung aus einem viereckigen, vorzugsweise rechteckigen, plattförmigen Material, wie einem Blech, insbesondere aus Aluminium, mittels Ausführen von Biegekanten, insbesondere deren vier, durch Biegeformung herstellbar.

In einer weiteren Ausführungsvariante der Trägervorrichtung gehen die beiden Wände je an einer Beigekanten aus dem Boden hervor, und die beiden abgewinkelten Profile je an einer weiteren Beigekante aus der entsprechenden Seitenwand hervor.

In einer weiteren Ausführungsvariante der Trägervorrichtung ist der Boden durchgängig bzw. lückenlos.

In einer weiteren Ausführungsvariante der Trägervorrichtung sind die beiden Wände durchgängig bzw. lückenlos.

In einer weiteren Ausführungsvariante weist die Trägervorrichtung senkrecht zur Längsrichtung einen symmetrischen Querschnitt auf.

In einer weiteren Ausführungsvariante der Trägervorrichtung weist der Boden die Form eines gleichschenkligen Trapezes auf.

In einer weiteren Ausführungsvariante der Trägervorrichtung liegen die beiden Seitenwände an ihren Vorderkanten weiter auseinander als an ihren Rückkanten.

In einer weiteren Ausführungsvariante der Trägervorrichtung schliessen die Wände je denselben stumpfen Winkel bzw. spitzen Winkel mit dem Boden ein, bevorzugt einen Winkel von 100°±5° bzw. von 80°±5°.

In einer weiteren Ausführungsvariante der Trägervorrichtung weisen die beiden abgewinkelten Profile zusammen respektive weist die Auflage- bzw. Montagegelegenheit bezüglich des Bodens einen Neigungswinkel im Bereich von 1° bis 35° auf, bevorzugt im Bereich von 5° bis 10° auf.

In einer weiteren Ausführungsvariante der Trägervorrichtung weisen die beiden abgewinkelten Profile Bohrungen, beispielsweise zur Befestigung des mindestens einen Photovoltaik- oder Solarkollektor-Moduls, auf.

Eine erfindungsgemässe Photovoltaik- oder Solarkollektor-Installation umfasst mindestens ein Photovoltaik- oder Solarkollektor-Modul, welches auf einer erfindungsgemässen Trägervorrichtung angeordnet ist.

In einer Ausführungsvariante ist die Photovoltaik- oder Solarkollektor-Installation auf einem Flachdach montiert, indem der Boden der Trägervorrichtung mit einer Last beschwert ist, insbesondere mit Schüttgut z.B. aus Schotter, Kies, Erde oder Sand. Alternative kann beispielsweise eine Betonplatte als Last eingesetzt werden.

In einer weiteren Ausführungsvariante der Photovoltaik-oder Solarkollektor-Installation sind Standard-Modultragprofile an den beiden abgewinkelten Profilen befestigt und das mindestens eine Photovoltaik- oder Solarkollektor-Modul ist auf den Standard-Modultragprofilen befestigt.

Es sei angemerkt, dass Kombinationen der oben aufgeführten Ausführungsvarianten weitere, speziellere Ausführungsbeispiele ergeben.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: eine perspektivische Ansicht eines Ausführungsbeispiels der erfindungsgemässen Trägervorrichtung;
- Fig. 2: Sicht von oben auf eine Platte zur Herstellung des Ausführungsbeispiels der erfindungsgemässen Trägervorrichtung von Fig. 1 mit eingezeichneten Biegelinien;
- Fig. 3: Vorderansicht des Ausführungsbeispiels der erfindungsgemässen Trägervorrichtung von Fig. 1;
- Fig. 4: Seitenansicht des Ausführungsbeispiels der erfindungsgemässen Trägervorrichtung von Fig. 1;
- Fig. 5: Sicht von oben auf eine weitere Platte zur Herstellung eines alternativen Ausführungsbeispiels der erfindungsgemässen Trägervorrichtung mit eingezeichneten Biegelinien;
- Fig. 6: Seitenansicht des alternativen Ausführungsbeispiels der erfindungsgemässen Trägervorrichtung von Fig. 5;
- Fig. 7: a) Seitenansicht eines Flachdachs mit einer beispielhaften Anordnung von erfindungsgemässen Photovoltaik- resp. Solarkollektor-Installationen; und
b) Sicht von oben auf das Flachdach von Fig. 7 a) mit der beispielhaften Anordnung der erfindungsgemässen Photovoltaik- resp. Solarkollektor-Installationen.

In den Figuren stehen gleiche Referenzzeichen für gleiche Elemente.

### DETAILLIERTE BESCHREIBUNG DER ERFINDUNG

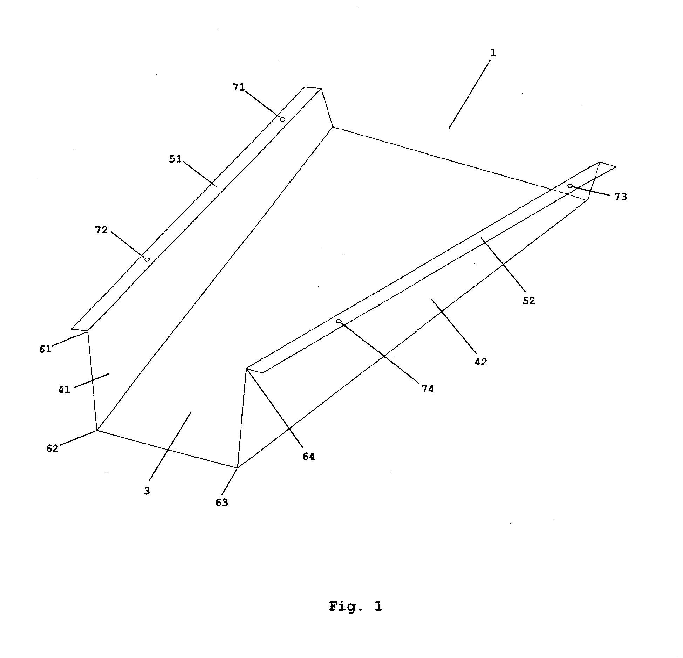

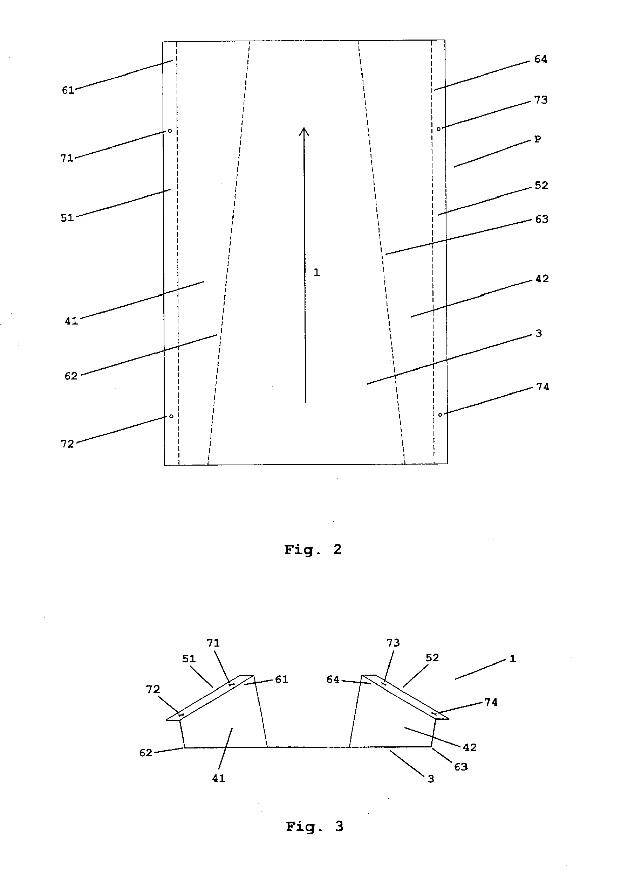

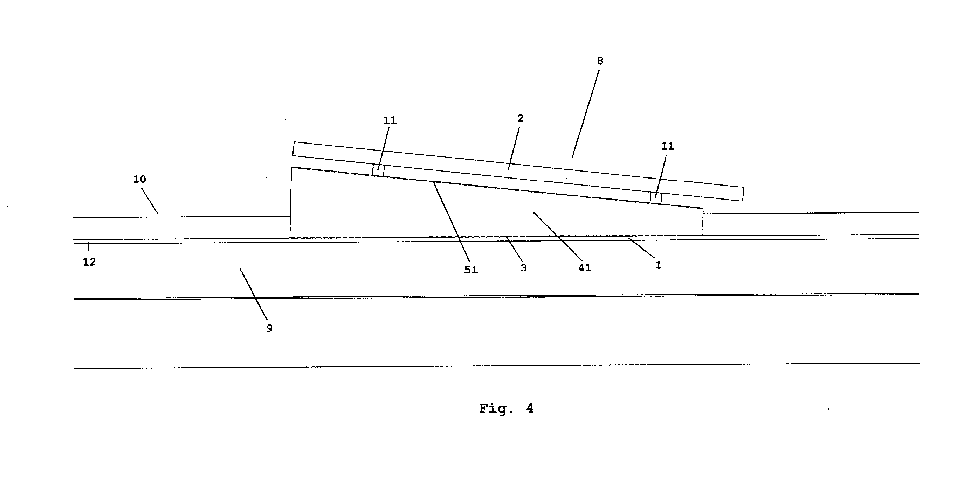

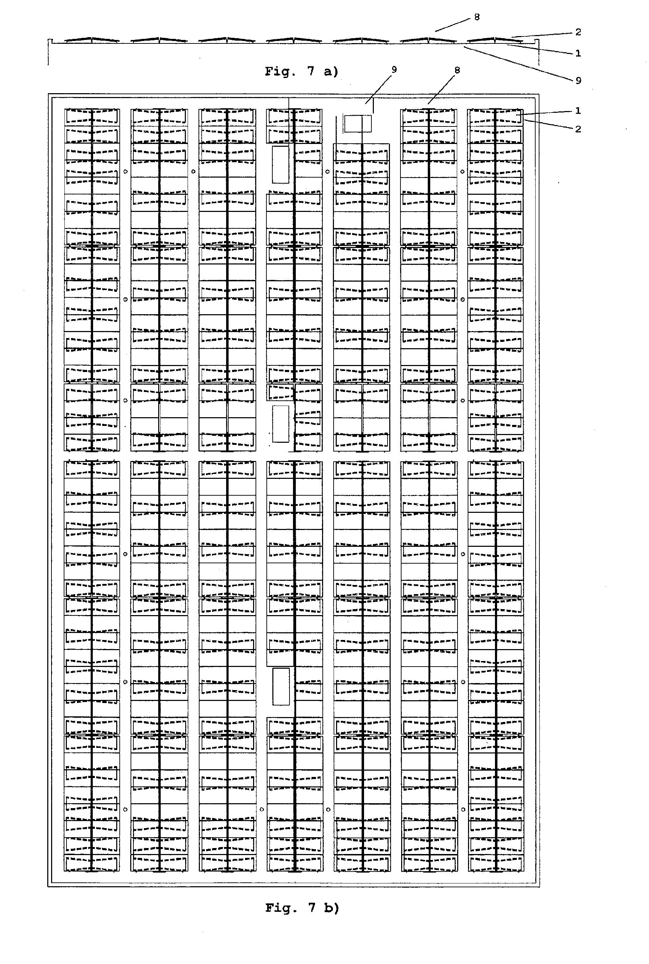

Fig. 1 zeigt ein Ausführungsbeispiel der erfindungsgemässen Trägervorrichtung 1 in einer perspektivischen Schrägansicht. Die erfindungsgemässe Trägervorrichtung 1 umfasst einen Boden 3 und zwei einander gegenüberliegend angeordnete Wände 41, 42. Beim vorliegenden Ausführungsbeispiel sind dies zwei Seitenwände 41, 42. Beide Seitenwände 41, 42 weisen an ihrer Oberkante je ein abgewinkeltes Profil 51, 52 auf. Dies ist derart ausgeführt, dass die beiden abgewinkelten Profile 51, 52 zusammen eine ebene, zum Boden hin geneigte Auflage- bzw. Montagegelegenheit für mindestens ein Photovoltaik- oder Solarkollektor-Modul (2 in Fig. 4) bilden. Die Trägervorrichtung 1 ist dabei einteilig ausgeführt. Sie wird beispielsweise aus dem rechteckigen Blech P, welches in Fig. 2 dargestellt ist durch Biegeformung an den vier eingezeichneten Biegelinien 61-64 hergestellt. Beim Blech P handelt es sich vorzugsweise um ein Aluminiumblech, damit die Trägervorrichtung 1 möglichst wetterbeständig ist. Der Boden 3 sowie die beiden Seitenwände 41, 42 bilden vorzugsweise geschlossene Flächen, d.h. sie weisen keine grösseren Aussparungen auf. Der Boden 3 kann aber z.B. einige kleine Löcher oder beispielsweise eine oder mehrere Rillen aufweisen, um Regenwasser durchzulassen respektive abzuführen. Wie aus Fig. 2 ersichtlich, ist die Trägervorrichtung 1 derart gestaltet, dass sie senkrecht zur Längsrichtung l einen symmetrischen Querschnitt aufweist. Die Biegelinien 62, 63 für die beiden Seitenwände 41, 42 sind derart ausgerichtet, dass der Boden 3 die Form eines gleichschenkligen Trapezes aufweist. Zudem verlaufen die Biegelinien 62, 63 für die beiden Seitenwände 41, 42 so, dass die beiden Seitenwände 41, 42 an ihren Vorderkanten weiter auseinanderliegen als an ihren Rückkanten. Ferner bilden die Seitenwände im vorliegenden Ausführungsbeispiel je einen Winkel von 100° mit dem Boden 3, d.h. sie stehen leicht schief nach aussen geneigt, wie dies aus Fig. 3 ersichtlich ist. Dadurch sind mehrere dieser Trägervorrichtungen 1 ineinander stapelbar, was sehr platzsparend ist für die Lagerung und den Transport. Des Weiteren ist aus Fig. 4 zu erkennen, dass die Auflage- bzw. Montagegelegenheit, welche die beiden abgewinkelten Profile 51, 52 zusammen bilden, bezüglich des Bodens 3 einen Neigungswinkel von ca. 6° aufweist. Dadurch wird erreicht, dass sich bei einer Anordnung von mehreren Photovoltaik-und/oder Solarkollektor-Installationen 8 (siehe Fig. 7 a) & b)) auf einem Flachdach 9 die einzelnen Photovoltaik-und/oder Solarkollektor Module 2 gegenseitig so wenig wie möglich abschatten (im Mittel über den Tagesverlauf), und so deren Wirkungsgrad maximiert wird. Die beiden abgewinkelten Profile 51, 52 weisen zur Befestigung von Standard-Modultragprofilen 11 Bohrungen 71-74 auf. An diesen Standard-Modultragprofilen 11 ist ihrerseits ein Photovoltaik- oder Solarkollektor-Modul 2 befestigt, womit die in Fig. 4 in Seitenansicht gezeigte Photovoltaik- oder Solarkollektor-Installation 8 gebildet wird. Alternativ kann ein Photovoltaik- oder Solarkollektor-Modul 2 (samt Standard-Modultragprofilen 11) mittels einer Klemmvorrichtung (nicht gezeigt) an das Trägerprofil 1 befestigt werden. Dies stellt geringere Anforderungen an die Herstellungs- bzw. Passgenauigkeit als im Fall einer geschraubten Befestigung, wo die Bohrungen 71-74 z.B. mit korrespondierenden Löchern im Photovoltaik- oder Solarkollektor-Modul 2 respektive den Standard-Modultragprofilen 11 genau übereinstimmen müssen.

Zur Montage dieser Photovoltaik- oder Solarkollektor-Installation 8 auf einem Flachdach 9 wird einfach die Trägervorrichtung 1 auf die Flachdachabdichtung bzw. Schutzlage 12 gestellt und daraufhin wird der Boden 3 mit Schüttgut 10, beispielsweise einer ca. 8 bis 10 cm dicken Schicht aus Schotter, Kies, Erde oder Sand, zugedeckt. Je nach der Grösse des Photovoltaik- oder Solarkollektor-Moduls und dessen Neigungswinkel ergibt sich eine bestimmte Windlast, welche die Trägervorrichtung aufnehmen können muss. Diese wiederum bestimmt dann das notwendige Gewicht des Schüttguts 10, welches mit seiner Gewichtskraft derart auf den Boden 3 wirkt, dass die Photovoltaik- oder Solarkollektor-Installation 8 auch bei starkem Wind festgehalten wird. Alternativ kann auch eine schwere Betonplatte als Gewicht auf den Boden 3 der Trägervorrichtung 1 gelegt werden. Durch diese Art von Montage der Photovoltaik- oder Solarkollektor-Installation 8 können Bohrungen im Flachdach 9 zur Befestigung der Trägervorrichtung 1 vermieden werden, was wünschenswert ist, denn solche Bohrungen führen oftmals zu undichten Stellen im Flachdach 9, durch welche hindurch Wasser ins Innere des Gebäudes dringt.

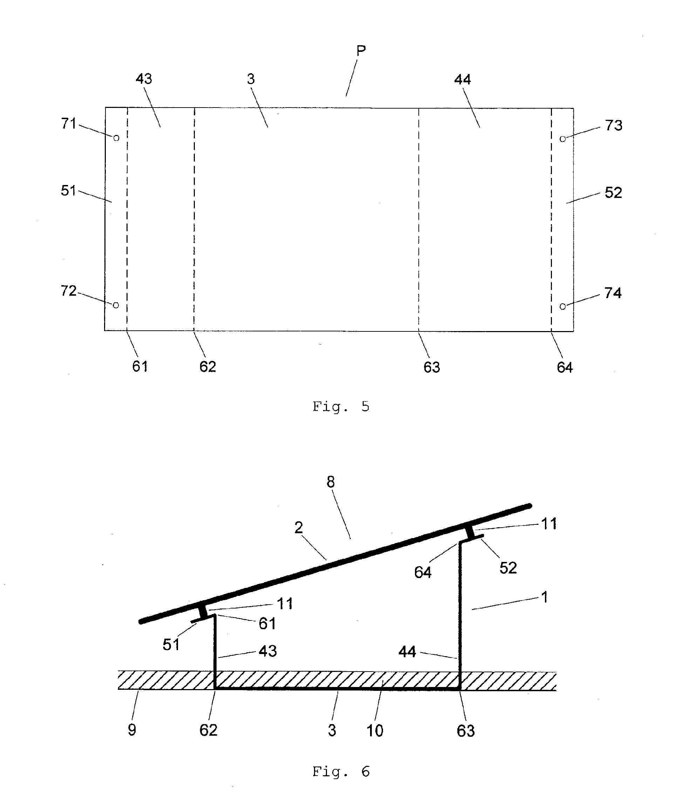

Fig. 5 zeigt ein Blech P aus dem eine alternative Ausführungsvariante der Trägervorrichtung 1 durch Biegeformung an den vier Biegekanten 61-64 hergestellt werden kann. In Fig. 6 ist diese alternative Ausführungsvariante der Trägervorrichtung 1 in Seitenansicht abgebildet. Hier bilden nun die beiden Wände eine Vorderwand 43 und eine Rückwand 44, wobei die Rückwand 44 höher ist als die Vorderwand 43. Ansonsten ist der Aufbau derselbe und auch die Montage erfolgt in gleicher Weise wie oben beschrieben für die Ausführungsvariante, wie sie in Fig. 4 gezeigt ist.

Schliesslich zeigt Fig. 7 a) in Seitenansicht und Fig. 7 b) aus der Vogelperspektive eine beispielhafte Anordnung von erfindungsgemässen Photovoltaik- und/oder Solarkollektor-Installationen 8 auf einem sehr grossen Flachdach 9. Mit Hilfe der einfach und schnell herstellbaren und somit kostengünstigen erfindungsgemässen Trägervorrichtung 1 respektive Photovoltaik- oder Solarkollektor-Installation 8 lassen sich rasch mit wenig Aufwand und folglich kostensparend Solaranlagen, wie beispielsweise die in Fig. 7 a) & b) dargestellte, auf Flachdächern sowie anderen ebenen Flächen vorteilhaft erstellen.

### LISTE DER BEZUGSZEICHEN

- 1: Trägervorrichtung
- 2: Photovoltaik- oder Solarkollektor-Modul
- 3: Boden
- 41, 42: Seitenwand
- 43: Vorderwand
- 44: Rückwand
- 51, 52: abgewinkeltes Profil
- 61, 62, 63, 64: Biegekante
- 71, 72, 73, 74: Bohrung
- 8: Photovoltaik- oder Solarkollektor-Installation
- 9: Flachdach
- 10: Last, z.B. Kiesschicht oder Betonplatte
- 11: Standard-Modultragprofil
- 12: Flachdachabdichtung, Schutzlage
- l: Längsrichtung
- P: plattenförmiges Ausgangsmaterial, Blech

## Patentansprüche

1. Trägervorrichtung (1) für mindestens ein Photovoltaik-oder Solarkollektor-Modul (2), insbesondere zur Anordnung auf einem Flachdach, umfassend einen Boden (3) und zwei einander gegenüberliegend angeordnete Wände (41, 42; 43, 44), wobei beide Wände (41, 42; 43, 44) an ihrer Oberkante je ein abgewinkeltes Profil (51, 52) aufweisen, derart dass die beiden abgewinkelten Profile (51, 52) zusammen eine ebene, zum Boden hin geneigte Auflage- bzw. Montagegelegenheit für das mindestens eine Photovoltaik-oder Solarkollektor-Modul (2) bilden, und wobei die Trägervorrichtung (1) einteilig ausgeführt ist.

2. Die Trägervorrichtung (1) nach Anspruch 1, **dadurch gekennzeichnet, dass** die Wände (41, 42) Seitenwände bilden und in Längsrichtung von einer Vorderkante zu einer Rückkante der Wände (41, 42) hin ansteigend verlaufen.

3. Die Trägervorrichtung (1)nach Anspruch 1, **dadurch gekennzeichnet, dass** die Wände (43, 44) eine Vorderwand (43) und eine Rückwand (44) bilden, wobei die Rückwand (44) höher ist als die Vorderwand (43).

4. Die Trägervorrichtung (1) nach einem der Ansprüche 1 bis 3, **dadurch gekennzeichnet, dass** die Trägervorrichtung (1) aus einem plattenförmigen Material (P), vorzugsweise aus einem Aluminiumblech, geformt ist.

5. Die Trägervorrichtung (1) nach einem der Ansprüche 1 bis 4, **dadurch gekennzeichnet, dass** die Trägervorrichtung (1) aus einem viereckigen, vorzugsweise rechteckigen, plattförmigen Material (P), wie einem Blech, insbesondere aus Aluminium, mittels Ausführen von Biegekanten (61, 62, 63, 64), insbesondere deren vier, durch Biegeformung herstellbar ist.

6. Die Trägervorrichtung (1) nach einem der Ansprüche 1 bis 5, **dadurch gekennzeichnet, dass** die beiden Wände (41, 42; 43, 44) je an einer Beigekanten (61, 62) aus dem Boden (3) hervorgehen, und dass die beiden abgewinkelten Profile (51, 52) je an einer weiteren Beigekante (63, 64) aus der entsprechenden Wand (41, 42; 43, 44) hervorgehen.

7. Die Trägervorrichtung (1) nach einem der Ansprüche 1 bis 6, **dadurch gekennzeichnet, dass** die Wände (41, 42; 43, 44) je denselben stumpfen Winkel bzw. spitzen Winkel mit dem Boden einschliesst, bevorzugt einen Winkel von 100°±5° bzw. von 80°±5°.

8. Die Trägervorrichtung (1) nach einem der Ansprüche 1 bis 7, **dadurch gekennzeichnet, dass** die beiden abgewinkelten Profile (51, 52) zusammen resp. die Auflage- bzw. Montagegelegenheit bezüglich des Bodens (3) einen Neigungswinkel im Bereich von 1° bis 35° aufweist, bevorzugt im Bereich von 5° bis 10° aufweist.

9. Die Trägervorrichtung nach einem der Ansprüche 1 bis 8, **dadurch gekennzeichnet, dass** die beiden abgewinkelten Profile (51, 52) Bohrungen (71, 72, 73, 74), beispielsweise zur Befestigung des mindestens einen Photovoltaik- oder Solarkollektor-Moduls (2), aufweisen.

10. Photovoltaik- oder Solarkollektor-Installation (8), umfassend mindestens ein Photovoltaik- oder Solarkollektor-Modul (2), welches auf einer Trägervorrichtung (1) nach einem der Ansprüche 1 bis 9 angeordnet ist.

11. Die Photovoltaik- oder Solarkollektor-Installation (8) nach Anspruch 10, **dadurch gekennzeichnet, dass** sie auf einem Flachdach (9) montiert ist, indem der Boden (3) der Trägervorrichtung (1) mit einer Last (10) beschwert ist, insbesondere mit Schüttgut z.B. aus Schotter, Kies, Erde oder Sand.

12. Die Photovoltaik- oder Solarkollektor-Installation (8) nach Anspruch 10 oder 11, **dadurch gekennzeichnet**, das Standard-Modultragprofile (11) an den beiden abgewinkelten Profilen (51, 52) befestigt sind, und das mindestens eine Photovoltaik- oder Solarkollektor-Modul (2) auf den Standard-Modultragprofilen (11) befestigt ist.
